# EUROPÄISCHE PATENTSCHRIFT

(11) **EP 2 092 970 B1**
(45) Veröffentlichungstag und Bekanntmachung des Hinweises auf die Patenterteilung: **18.05.2011**
(21) Anmeldenummer: 08002381.5
(22) Anmeldetag: 08.02.2008
(51) Int. Cl.: B01D 29/11

(54) **Filtervorrichtung zum Filtrieren einer Flüssigkeit**
Filter device for filtering a liquid
Dispositif de filtrage d'un liquide

(43) Veröffentlichungstag der Anmeldung: 26.08.2009
(73) Patentinhaber: ARGO-HYTOS GmbH, 76703 Kraichtal-Menzingen (DE)
(72) Erfinder: Baumgärtner, Reinhard, 76689 Karlsdorf-Neuthard 2 (DE); Weik, Dietmar, Dipl.-Ing., 76646 Bruchsal (DE); Jung, Matthias, Dipl.-Ing., 75045 Walzbachtal-Jöhlingen (DE); Weiser, Thomas, Dipl.-Ing., 75031 Eppingen (DE)
(74) Vertreter: Hoeger, Stellrecht & Partner Patentanwälte

(56) Entgegenhaltungen:
- EP-B- 0 783 361
- DE-A1- 10 006 327
- DE-B3- 10 313 239
- US-A1- 2003 038 073

## Beschreibung

Die Erfindung betrifft eine Filtervorrichtung zum Filtrieren einer Flüssigkeit, insbesondere eines Hydrauliköls, mit den Merkmalen des Oberbegriffes von Patentanspruch 1.

Filtervorrichtungen der eingangs genannten Art kommen in einer Vielzahl von Anwendungen in Hydrauliksystemen zum Einsatz, insbesondere bei selbstfahrenden Maschinen, wie zum Beispiel Baumaschinen oder Landmaschinen. Mittels derartiger Filtervorrichtungen können insbesondere Mineralöle für Hydrauliksysteme gefiltert werden. Die Hydrauliksysteme müssen sehr hohen Anforderungen an die Reinheit der Hydraulikflüssigkeit genügen, um über lange Betriebszeiten störungsfrei und mit geringem Verschleiß ihre Funktion erfüllen zu können. Da sich das Filterelement im Laufe der Betriebsdauer allmählich mit Schmutzteilchen zusetzt, ist es üblicherweise austauschbar im Filtergehäuse gehalten. Letzteres kann beispielsweise zweiteilig ausgestaltet sein und einen Filterkopf aufweisen, der den mindestens einen Einlass und/oder den mindestens einen Auslass umfasst, sowie einen Filtertopf, der mit dem Filterkopf unter Zwischenlage von mindestens einem Dichtelement verbindbar ist. Der Filterkopf weist eine Einführöffnung auf, über die das Filterelement in das Filtergehäuse einführbar ist und die mittels eines Deckels verschließbar ist.

Das Filterelement ist im Strömungsweg der Flüssigkeit zwischen dem Einlass und dem Auslass angeordnet, so dass die über den Einlass einströmende Flüssigkeit das Filterelement durchströmen kann und hierbei gefiltert wird, um anschließend das Filtergehäuse über den mindestens einen Auslass zu verlassen.

Um den stromaufwärts des Filterelementes angeordneten Schmutzbereich, der die zu filtrierende Flüssigkeit aufnimmt, von dem stromabwärts des Filterelements angeordneten Reinbereich, der die gefilterte Flüssigkeit aufnimmt, abtrennen zu können, kommt eine Dichtungseinrichtung zum Einsatz mit einem Dichtelement, das in einer Dichtstellung dichtend an eine zugeordnete erste Dichtfläche anlegbar ist. Das Dichtelement kann beispielsweise an einer Endscheibe des Filterelements angeordnet sein. Dies ist aus der EP 1 326 693 B1 bekannt.

Während des Betriebes der Filtervorrichtung unterliegt das Filterelement häufig wechselnden Druckbelastungen, wobei sichergestellt sein muss, dass das Dichtelement in jedem Falle dicht an der zugeordneten ersten Dichtfläche anliegt. Dieses Ziel wird erreicht durch die Bereitstellung einer Arretierungseinrichtung, mit deren Hilfe das Dichtelement zuverlässig an der ersten Dichtfläche gehalten werden kann, wobei auch bei wechselnden Druckbelastungen, denen das Filterelement während des Betriebes der Filtervorrichtung ausgesetzt sein kann, das Dichtelement relativ zur ersten Dichtfläche zumindest in axialer Richtung festlegbar ist. Das Dichtelement kann somit relativ zur ersten Dichtfläche zumindest in axialer Richtung nicht mehr bewegt werden, nachdem es seine Dichtstellung eingenommen hat.

Um die Herstellungskosten der Filtervorrichtung zu reduzieren und insbesondere eine Nachbearbeitung des Filtergehäuses vermeiden zu können, ist im Filtergehäuse ein Tragring gehalten, der die erste Dichtfläche oder das Dichtelement aufweist. Der Tragring kann bei der Montage der Filtervorrichtung in das Filtergehäuse eingesetzt werden und beispielsweise die erste Dichtfläche aufweisen. Somit können einheitliche Filtergehäuse verwendet werden, ohne dass diese an ein bestimmtes Filterelement angepasst werden müssen. Zur Anpassung an ein bestimmtes Filterelement ist es lediglich erforderlich, einen dem Filterelement zugeordneten Tragring in das Filtergehäuse einzusetzen. Der Tragring kann dann beispielsweise die erste Dichtfläche aufweisen und am dazu passenden Filterelement kann das zugeordnete Dichtelement angeordnet sein. Alternativ kann selbstverständlich auch vorgesehen sein, dass der Tragring das Dichtelement aufweist und die zugeordnete Dichtfläche am Filterelement angeordnet ist.

Aus der deutschen Patentschrift DE 103 13 239 B3 ist eine Filtervorrichtung bekannt, bei der mehrere Filterelemente zum Einsatz kommen, die mit Hilfe einer Vielzahl von radial ausfahrbaren Riegeln aneinander festgelegt werden können.

Filtervorrichtungen mit den Merkmalen des Oberbegriffes von Patentanspruch 1 sind in der Offenlegungsschrift DE 100 06 327 A1 und der Veröffentlichung US 2003/038073 A1 beschrieben. Bei diesen Filtervorrichtungen ist das Filterelement an einem Tragring gehalten, der im Filtergehäuse festgelegt ist. Die Positionierung des Tragringes gibt hierbei die Länge des Filterelementes vor. Dies hat zur Folge, dass bei der Herstellung des Filterelementes hohe Anforderungen an die zulässigen Toleranzen gestellt werden müssen.

Aufgabe der vorliegenden Erfindung ist es, eine Filtervorrichtung der eingangs genannten Art derart weiterzubilden, dass die Toleranzanforderungen bei der Fertigung des Filterelementes reduziert werden können.

Diese Aufgabe wird durch eine Filtervorrichtung mit den Merkmalen von Patentanspruch 1 gelöst.

Gemäß der Erfindung ist der Tragring zusammen mit dem Filterelement unter Aufrechterhaltung einer dichten Anlage des Dichtelementes an der ersten Dichtfläche in axialer Richtung beweglich im Filtergehäuse gehalten. Der Tragring kann somit zusammen mit dem Filterelement in axialer Richtung im Filtergehäuse verschoben werden, ohne dass dadurch die dichte Anlage des Dichtelementes an der ersten Dichtfläche beeinträchtigt wird. Eine derartige Ausgestaltung ermöglicht einen Toleranzausgleich dergestalt, dass unterschiedlich lange Filterelemente in das Filtergehäuse eingesetzt werden können, denn mittels des verschieblich gehaltenen Tragringes können die unterschiedlichen Längen der Filterelemente ausgeglichen werden, ohne dass dadurch die dichte Anlage des Dichtelements an der ersten Dichtfläche beeinträchtigt wird. Die Toleranzanforderungen bei der Fertigung des Filterelementes können dadurch gering gehalten werden. Dadurch können dessen Herstellungskosten reduziert werden.

Von Vorteil ist es, wenn das Dichtelement mittels der Arretierungseinrichtung mit der ersten Dichtfläche verspannbar ist. Es kann somit das Dichtelement mit der ersten Dichtfläche verspannt werden, indem es in seine Dichtstellung überführt wird. Das Dichtelement übt somit auch bei fehlender Druckbelastung des Filterelements eine Kraft auf die zugeordnete erste Dichtfläche aus, d. h. es unterliegt einer Vorspannung, so dass in jedem Falle eine dichte Anlage des Dichtelements an der zugeordneten ersten Dichtfläche gewährleistet ist, wobei mittels der Arretierungseinrichtung sichergestellt ist, dass sich das Dichtelement in axialer Richtung nicht relativ zur Dichtfläche bewegen kann.

Günstig ist es, wenn das Dichtelement als Dichtlippe ausgestaltet ist, denn dies ermöglicht eine besonders zuverlässige Abdichtung des Schmutzbereichs vom Reinbereich des Filterelements.

Bevorzugt weist das Filterelement ein insbesondere sternförmig gefaltetes Filtermaterial auf, an dessen oberer und/oder unterer Stirnseite eine Endscheibe angeordnet ist und das in radialer Richtung, d. h. radial von innen nach außen oder radial von außen nach innen, von der Flüssigkeit durchströmbar ist, wobei an einer Endscheibe die erste Dichtfläche oder das Dichtelement angeordnet ist. Vorzugsweise ist die erste Dichtfläche oder das Dichtelement an der dem Einlass des Filtergehäuses zugewandten oberen Endscheibe positioniert. Es kann allerdings auch vorgesehen sein, dass die erste Dichtfläche oder das Dichtelement an der dem Einlass abgewandten unteren Endscheibe des Filterelements angeordnet ist.

Die erste Dichtfläche bzw. das Dichtelement ist günstigerweise stoffschlüssig oder einstückig mit der Endscheibe verbunden. Beispielsweise kann das Dichtelement mit der Endscheibe verklebt oder verschweißt sein. Besonders vorteilhaft ist eine einstückige Ausgestaltung von Dichtfläche bzw. Dichtelement und Endscheibe dergestalt, dass sie ein gemeinsames Kunststoffteil ausbilden.

Die Arretierungseinrichtung weist bei einer bevorzugten Ausgestaltung der Erfindung miteinander zusammenwirkende erste und zweite Arretierungsglieder auf, die relativ zueinander bewegbar sind zwischen einer Freigabestellung, in der das Dichtelement in axialer Richtung relativ zur ersten Dichtfläche bewegbar ist, und einer Arretierungsstellung, in der das Dichtelement zumindest in axialer Richtung unbeweglich an der ersten Dichtfläche gehalten ist. Beim Einsetzen des Filterelements in das Filtergehäuse ist somit auf einfache Weise eine dichte Anlage des Dichtelementes an der ersten Dichtfläche erzielbar, indem die Arretierungsglieder relativ zueinander ausgehend von einer Freigabestellung in eine Arretierungsstellung bewegt werden. Soll das Filterelement dem Filtergehäuse entnommen werden, so ist es hierzu lediglich erforderlich, dass die Arretierungsglieder relativ zueinander in ihre Freigabestellung überführt werden, denn dann kann die dichte Anlage des Dichtelementes an der zugeordneten ersten Dichtfläche aufgehoben und das Filterelement dem Filtergehäuse entnommen werden.

Günstigerweise ist das Filterelement in der Freigabestellung der Arretierungsglieder entlang einer Längsachse des Filtergehäuses in das Filtergehäuse einsetzbar und durch Drehen des in das Filtergehäuse eingesetzten Filterelements um die Längsachse des Filtergehäuses sind die Arretierungsglieder in ihre Arretierungsstellung überführbar.

Von Vorteil ist es, wenn die Arretierungseinrichtung mindestens zwei zweite Arretierungsglieder aufweist, die in Umfangsrichtung des Filterelements im Abstand zueinander angeordnet sind und zwischen sich einen Freiraum ausbilden zum Hindurchführen eines ersten Arretierungsgliedes beim Einsetzen des Filterelements in das Filtergehäuse. Insbesondere kann vorgesehen sein, dass mehrere im Abstand zueinander angeordnete erste Arretierungsglieder zum Einsatz kommen, die jeweils durch einen Freiraum zwischen zwei zweiten Arretierungsgliedern hindurchführbar sind. Die Anzahl, Form, Kontur und/oder Position der ersten Arretierungsglieder kann an den jeweils zugeordneten Freiraum zwischen zwei zweiten Arretierungsgliedern angepasst sein. Dadurch kann auf konstruktiv einfache Weise sichergestellt werden, dass in das Filtergehäuse nur die dazu passenden Filterelemente eingesetzt werden können, also insbesondere Filterelemente, die die für den jeweiligen Einsatzzweck erforderliche Filterqualität aufweisen, um eine Beschädigung des Hydrauliksystems zu vermeiden. Die Arretierungseinrichtung stellt somit nicht nur die zumindest in axialer Richtung unbewegliche Fixierung des Dichtelements an der zugeordneten ersten Dichtfläche sicher, sondern sie bildet zusätzlich eine Art Kodierung nach Art eines Schlüssel-Schloss-Prinzips, mit dem auf einfache Weise sichergestellt werden kann, dass in das Filtergehäuse nur das dazu passende Filterelement derart eingesetzt werden kann, dass anschließend eine dichte Abtrennung des Schmutzbereichs vom Reinbereich der Filtervorrichtung gewährleistet ist.

Eine zuverlässige Arretierung des Dichtelements an der ersten Dichtfläche wird bei einer bevorzugten Ausgestaltung der Erfindung dadurch sichergestellt, dass das mindestens eine erste Arretierungsglied in der Arretierungsstellung ein zweites Arretierungsglied untergreift.

Wie bereits-erwähnt, weist das Filterelement vorzugsweise ein Filtermaterial auf, an dessen oberer und/oder unterer Stirnseite eine Endscheibe angeordnet ist und das in radialer Richtung durchströmbar ist. Günstig ist es, wenn an einer Endscheibe zumindest ein erstes oder ein zweites Arretierungsglied angeordnet ist.

Das mindestens eine erste oder zweite Arretierungsglied ist vorzugsweise stoffschlüssig oder einstückig mit der Endscheibe verbunden. Beispielsweise kann das mindestens eine erste oder zweite Arretierungsglied mit der Endscheibe verklebt oder verschweißt sein. Es kann auch vorgesehen sein, dass mindestens ein erstes oder zweites Arretierungsglied mit der Endscheibe einstückig verbunden ist, wobei insbesondere vorgesehen sein kann, dass das Arretierungsglied zusammen mit der Endscheibe ein einteiliges Kunststoffformteil ausbildet.

Insbesondere zur Verringerung der Herstellungskosten ist es günstig, wenn das mindestens eine erste oder zweite Arretierungsglied einstückig mit der ersten Dichtfläche oder dem Dichtelement verbunden ist. Beispielsweise kann das mindestens eine erste oder zweite Arretierungsglied in Verbindung mit der Dichtfläche bzw. dem Dichtelement und einer Endscheibe des Filterelementes ein einteiliges Kunststoffformteil ausbilden.

Um auf einfache Weise beim Einsetzen des Filterelements in das Filtergehäuse eine eindeutige Positionierung des Dichtelementes an der zugeordneten ersten Dichtfläche zu erzielen, ist es von Vorteil, wenn die Arretierungseinrichtung zumindest eine in axialer Richtung geneigte Führungsfläche aufweist, an der ein erstes und/oder zweites Arretierungsglied beim Übergang von der Freigabestellung in die Arretierungsstellung unter Ausführung einer Axialbewegung entlang gleitet. Die Führungsfläche bildet somit eine Zwangsführung aus für die ersten und/oder zweiten Arretierungsglieder dergestalt, dass diese beim Übergang von der Freigabestellung in die Arretierungsstellung in axialer Richtung so weit verschoben werden, dass die mit den ersten oder zweiten Arretierungsgliedern gekoppelte erste Dichtfläche oder das mit den ersten oder zweiten Arretierungsgliedern gekoppelte Dichtelement eine eindeutige Position relativ zum Dichtelement bzw. relativ zur ersten Dichtfläche einnimmt. Hierzu kann vorgesehen sein, dass die erste Dichtfläche oder das Dichtelement mit dem mindestens einen ersten oder zweiten Arretierungsglied starr verbunden ist.

Bevorzugt ist an der Unterseite von mindestens einem zweiten Arretierungsglied eine Führungsfläche angeordnet, wobei ein erstes Arretierungsglied beim Übergang von der Freigabestellung in die Arretierungsstellung an der Führungsfläche entlang verschiebbar ist. Beispielsweise kann vorgesehen sein, dass ein erstes Arretierungsglied in axialer Richtung durch einen Freiraum zwischen zwei zweiten Arretierungsgliedern hindurchführbar und anschließend entlang einer unterseitig an einem zweiten Arretierungsglied angeordneten Führungsfläche verschiebbar ist beim Übergang von seiner Freigabestellung in seine Arretierungsstellung. In der Arretierungsstellung nimmt somit das erste Arretierungsglied eine Position unterhalb eines zweiten Arretierungsgliedes ein, so dass es in axialer Richtung nicht wieder nach oben bewegt werden kann in Richtung der Einführöffnung des Filtergehäuses, über die das Filterelement in das Gehäuse einführbar ist.

Bei einer besonders bevorzugten Ausgestaltung der erfindungsgemäßen Filtervorrichtung bildet die Arretierungseinrichtung eine Bajonettverbindung aus. Diese umfasst einander in der Arretierungsstellung untergreifende Bajonettflügel in Form der ersten und zweiten Arretierungsglieder.

Von Vorteil ist es, wenn die Filtervorrichtung mindestens ein Anschlagelement aufweist. Mittels des Anschlagelementes kann dem Filterelement und damit auch dem Dichtelement relativ zur zugeordneten ersten Dichtfläche eine eindeutige Position vorgegeben werden. Dadurch lässt sich beim Einführen des Filterelementes in das Filtergehäuse auf einfache Weise eine dichte Abtrennung des Schmutzbereiches vom Reinbereich sicherstellen.

Bevorzugt ist das mindestens eine Anschlagelement auf ein erstes oder zweites Arretierungsglied aufsetzbar. Somit schlägt beim Einführen des Filterelements in das Filtergehäuse das Anschlagelement an einem ersten oder zweiten Arretierungsglied an und gibt dadurch dem Dichtelement eine eindeutige Position relativ zur Dichtfläche vor.

Günstig ist es, wenn die Filtervorrichtung mehrere in Umfangsrichtung des Filterelements im Abstand zueinander angeordnete Anschlagelemente aufweist. Die Anschlagelemente können beispielsweise als radiale Vorsprünge ausgestaltet sein. Sie können sich in Umfangsrichtung entlang eines Teilbereiches des Filterelements erstrecken, wobei sie am Filterelement oder auch an der Innenseite des Filtergehäuses angeordnet sein können.

Bevorzugt ist in der Arretierungsstellung zumindest ein zweites Arretierungsglied in axialer Richtung zwischen einem Anschlagelement und einem ersten Arretierungsglied angeordnet. Das zweite Arretierungsglied wird somit in axialer Richtung zwischen einem ersten Arretierungsglied und einem Anschlagelement aufgenommen. Dadurch ist auf konstruktiv einfache Weise sichergestellt, dass das zweite Arretierungsglied in seiner Arretierungsstellung in axialer Richtung weder nach oben, d. h. in Richtung der Einführöffnung des Filtergehäuses, noch nach unten in die der Einführöffnung abgewandte Richtung relativ zum ersten Arretierungsglied bewegt werden kann.

Bei einer mechanisch besonders belastbaren Ausgestaltung der erfindungsgemäßen Filtervorrichtung kommen mehrere in Umfangsrichtung des Filterelements im Abstand zueinander angeordnete erste Arretierungsglieder sowie mehrere axial und im Umfangsrichtung versetzt zu den ersten Arretierungsgliedern angeordnete Anschlagelemente zum Einsatz.

Bei einer bevorzugten Ausführungsform ist das mindestens eine Anschlagelement an einer Endscheibe des Filterelements angeordnet, beispielsweise an der dem Einlass des Filtergehäuses zugewandten oberen Endscheibe. Alternativ kann beispielsweise vorgesehen sein, dass das mindestens eine Anschlagelement an der dem Einlass abgewandten unteren Endscheibe des Filterelements positioniert ist.

Günstig ist es, wenn das mindestens eine Anschlagelement stoffschlüssig oder einstückig mit der Endscheibe verbunden ist. Insbesondere kann vorgesehen sein, dass das mindestens eine Anschlagelement mit der Endscheibe verklebt oder verschweißt ist. Alternativ kann eine einstückige Ausgestaltung des mindestens einen Anschlagelementes in Kombination mit der Endscheibe zum Einsatz kommen in Form eines einteiligen Kunststoffformteiles.

Zwischen dem Tragring und dem Filtergehäuse ist bei einer vorteilhaften Ausführungsform der Erfindung ein dichtend an eine zweite Dichtfläche anlegbarer Dichtring angeordnet. Hierbei ist es günstig, wenn der Dichtring eine Dichtlippe aufweist.

Der Dichtring kann beispielsweise in einer Ringnut des Tragrings angeordnet sein.

Die zweite Dichtfläche ist bevorzugt von einer Ausdrehung des Filtergehäuses gebildet. Im Bereich der Ausdrehung kann das Filtergehäuse eine hochwertige

Oberflächenbearbeitung aufweisen mit einer geringen Rauhtiefe, wohingegen in den restlichen Bereichen des Filtergehäuses eine hochwertige Oberflächenbearbeitung entfallen kann.

Günstigerweise ist der Tagring um die Längsachse des Filtergehäuses unverdrehbar im Filtergehäuse gehalten. Der Tragring ist somit zwar in axialer Richtung relativ zum Filtergehäuse verschiebbar, er kann jedoch in Umfangsrichtung relativ zum Filtergehäuse nicht bewegt werden.

Es kann beispielsweise vorgesehen sein, dass am Tragring und/oder am Filtergehäuse mindestens ein radialer Vorsprung angeordnet ist, der in eine am Filtergehäuse bzw. am Tragring angeordnete Ausnehmung eintaucht. Die mindestens eine Ausnehmung bildet in Kombination mit dem in diese eintauchenden Vorsprung eine Verdrehsicherung für den Tragring.

Von besonderem Vorteil ist es, wenn am Tragring das Dichtelement oder die erste Dichtfläche und axial beabstandet zum Dichtelement bzw. zur ersten Dichtfläche mindestens ein erstes oder zweites Arretierungsglied angeordnet sind. Es kann beispielsweise vorgesehen sein, dass der Tragring eine das Filterelement in Umfangsrichtung umgebende Ringwand ausbildet, die in einem oberen Endbereich das Dichtelement oder die erste Dichtfläche und in einem unteren Endbereich mindestens ein erstes oder zweites Arretierungsglied umfasst.

Von Vorteil ist es, wenn der Tragring doppelwandig ausgebildet ist mit zwei koaxial zueinander ausgerichteten und starr miteinander verbundenen Ringwänden, wobei an der inneren Ringwand das Dichtelement oder die erste Dichtfläche und mindestens ein erstes oder zweites Arretierungsglied angeordnet sind und wobei an der äußeren Ringwand Befestigungselemente zur Befestigung des Tragrings am Filtergehäuse positioniert sind. Die äußere Ringwand kann außerdem die bereits erwähnte Ringnut aufweisen zur Aufnahme eines Dichtringes, der an die zweite Dichtfläche dichtend anlegbar ist.

Bevorzugt ist das mindestens eine erste oder zweite Arretierungsglied stoffschlüssig oder einstückig mit dem Tragring verbunden. Es kann beispielsweise vorgesehen sein, dass das mindestens eine erste oder zweite Arretierungsglied mit dem Tragring verklebt oder verschweißt ist. Von besonderem Vorteil ist es, wenn das mindestens eine erste oder zweite Arretierungsglied in Kombination mit dem Tragring ein einteiliges Kunststoffformteil ausbildet.

Als besonders vorteilhaft hat es sich erwiesen, wenn am Tragring die erste Dichtfläche und mindestens ein erstes oder zweites Arretierungsglied angeordnet sind und zwischen der ersten Dichtfläche und dem mindestens einen ersten oder zweiten Arretierungsglied mindestens eine schräg oder senkrecht zur Umfangsrichtung verlaufende Vertiefung am Tragring angeordnet ist. Der Abstand zwischen der ersten Dichtfläche und dem mindestens einen ersten oder zweiten Arretierungsglied kann dem Abstand entsprechen, den das der ersten Dichtfläche zugeordnete Dichtelement zu dem auf das mindestens eine erste oder zweite Arretierungsglied aufsetzbaren Anschlagelement aufweist, so dass eine dichte Anlage des Dichtelements an der ersten Dichtfläche nur dann gewährleistet ist, wenn die genannten Abstände einander entsprechen, da ansonsten aufgrund der zwischen der ersten Dichtfläche und dem ersten bzw. zweiten Arretierungsglied angeordneten Vertiefung keine dichte Anlage des Dichtelements an der ersten Dichtfläche möglich ist. Das Dichtelement und das mindestens eine Anschlagelement können am Filterelement angeordnet sein, so dass auf einfache Weise gewährleistet ist, dass nur ein dem jeweiligen Tragring zugeordnetes Filterelement in das Filtergehäuse eingesetzt werden kann. Durch Wahl des Abstandes zwischen der ersten Dichtfläche und dem mindestens einen ersten oder zweiten Arretierungsglied, die am Tragring angeordnet sind, kann somit eine Kodierung erzielt werden, so dass sichergestellt ist, dass nur dazu passende Filterelemente zum Einsatz kommen können, die eine dem jeweiligen Einsatzzweck erforderliche Filterqualität aufweisen.

Besonders günstig ist es, wenn die erste Dichtfläche und das mindestens eine erste oder zweite Arretierungsglied an einander abgewandten Endbereichen des Tragrings angeordnet sind. Die erste Dichtfläche kann beispielsweise an einem oberen Endbereich angeordnet sein und das mindestens eine erste oder zweite Arretierungsglied kann an einem unteren Endbereich des Tragrings positioniert sein.

Wie bereits erläutert, ist der Tragring in das Filtergehäuse einsetzbar. Hierbei ist es günstig, wenn er mit dem Filtergehäuse verrastbar ist. Hierzu können miteinander zusammenwirkende Rastelemente zum Einsatz kommen, beispielsweise am Tragring angeordnete, insbesondere an diesen angeformte Rastflügel, die in eine in das Filtergehäuse eingeformte Rastaufnahme eintauchen.

Das Filterelement der Filtervorrichtung weist bevorzugt ein radial von einer Flüssigkeit, insbesondere von Hydrauliköl, durchströmbares Filtermaterial auf, an dessen oberer und/oder unterer Stirnseite eine Endscheibe angeordnet ist, wobei an einer Endscheibe eine erste Dichtfläche oder ein dichtend an eine erste Dichtfläche anlegbares Dichtelement gehalten ist. Um auf einfache Weise sicherzustellen, dass das Dichtelement auch bei wechselnden Druckbelastungen zuverlässig an der ersten Dichtfläche anliegt, ist an einer Endscheibe zumindest ein erstes Arretierungsglied angeordnet, das mit einem zweiten Arretierungsglied der Filtervorrichtung zusammenwirkt zum

Arretieren des Dichtelements zumindest in axialer Richtung relativ zur ersten Dichtfläche. In der Betriebsstellung des Filterelementes kann somit auf einfache Weise eine Axialbewegung des Dichtelementes relativ zur ersten Dichtfläche vermieden werden.

Bevorzugt ist das mindestens eine erste Arretierungsglied und/oder die erste Dichtfläche bzw. das Dichtelement stoffschlüssig oder einstückig mit der oberen oder unteren Endscheibe des Filterelements verbunden. Das mindestens eine erste Arretierungsglied und/oder das Dichtelement kann beispielsweise mit der oberen oder unteren Endscheibe verklebt oder verschweißt sein. Von besonderem Vorteil ist es, wenn das erste Arretierungsglied und/oder das Dichtelement in Kombination mit der oberen oder unteren Endscheibe ein einteiliges Kunststoffformteil ausbilden.

In axialer Richtung zwischen der ersten Dichtfläche bzw. dem Dichtelement und dem mindestens einen ersten Arretierungsglied ist bei einer bevorzugten Ausgestaltung des erfindungsgemäßen Filterelementes zumindest ein Anschlagelement angeordnet. Mittels des Anschlagelementes kann beim Einführen des Filterelementes in das Filtergehäuse dem Dichtelement eine definierte Lage relativ zur Dichtfläche vorgegeben werden. Insbesondere kann vorgesehen sein, dass das Anschlagelement in der Betriebsstellung des Filterelementes auf ein im Filtergehäuse angeordnetes zweites Arretierungsglied aufsetzbar ist.

Vorteilhafterweise umfasst das Filterelement mehrere, in Umfangsrichtung im Abstand zueinander angeordnete erste Arretierungsglieder sowie mehrere axial und in Umfangsrichtung versetzt zu den ersten Arretierungsgliedern angeordnete Anschlagelemente. Die Anzahl, Form, Kontur und/oder Position der ersten Arretierungsglieder kann an die Anzahl, Form, Kontur bzw. Position von Freiräumen zwischen zwei im Filtergehäuse angeordneten zweiten Arretierungsgliedern angepasst sein, so dass nur Filterelemente mit der passenden Ausgestaltung der ersten Arretierungsglieder in das Filtergehäuse eingesetzt werden können. Außerdem kann der axiale Abstand zwischen den ersten Arretierungsgliedern und den Anschlagelementen an die axiale Ausdehnung der im Filtergehäuse angeordneten zweiten Arretierungsglieder angepasst sein, die beim Einsetzten des Filterelementes in das Filtergehäuse vom Zwischenraum zwischen den Anschlagelementen und den ersten Arretierungsgliedern aufgenommen werden, wobei die Anschlagelemente auf die zweiten Arretierungsglieder aufsitzen können und die ersten Arretierungsglieder unterseitig an die zweiten Arretierungsglieder angelegt werden können.

Die nachfolgende Beschreibung einer bevorzugten Ausführungsform der Erfindung dient im Zusammenhang mit der Zeichnung der näheren Erläuterung. Es zeigen:

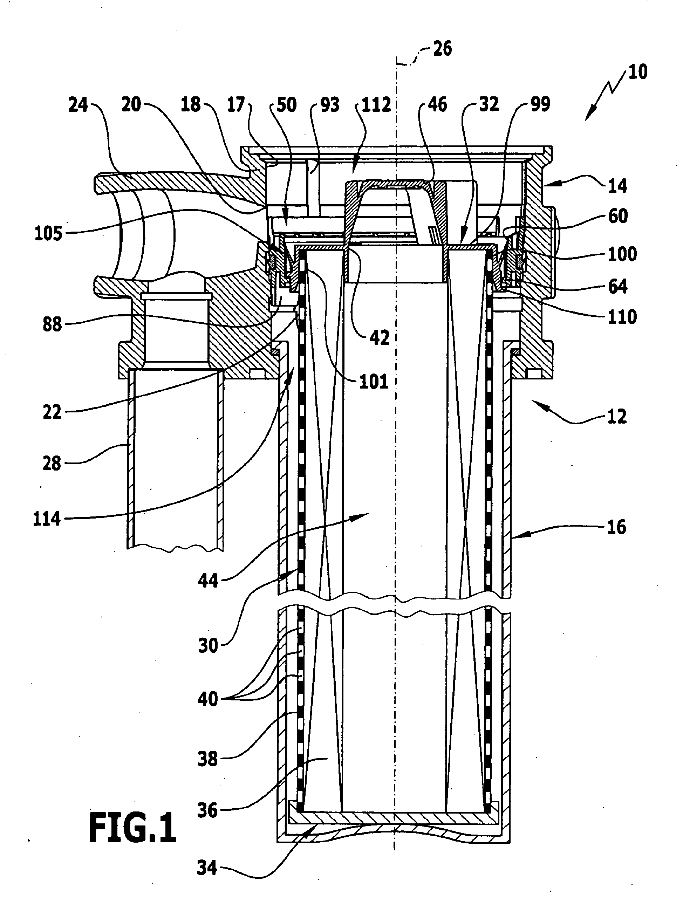

- Figur 1:: einen schematischen Längsschnitt einer erfindungsgemäßen Fil- tervorrichtung mit einem Filterkopf und einem Filtertopf, in die ein Filterelement mit einer oberen Endscheibe und ein Tragring eingesetzt sind;

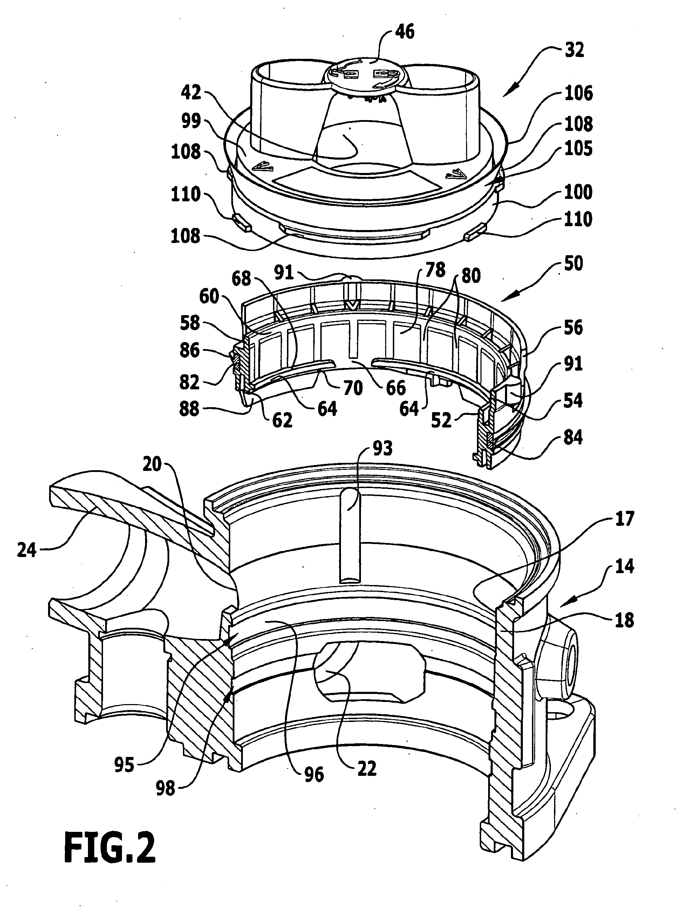

- Figur 2:: eine teilweise geschnittene perspektivische Ansicht der oberen Endscheibe, des Tragrings und des Filterkopfes nach Art einer Explosionszeichnung;

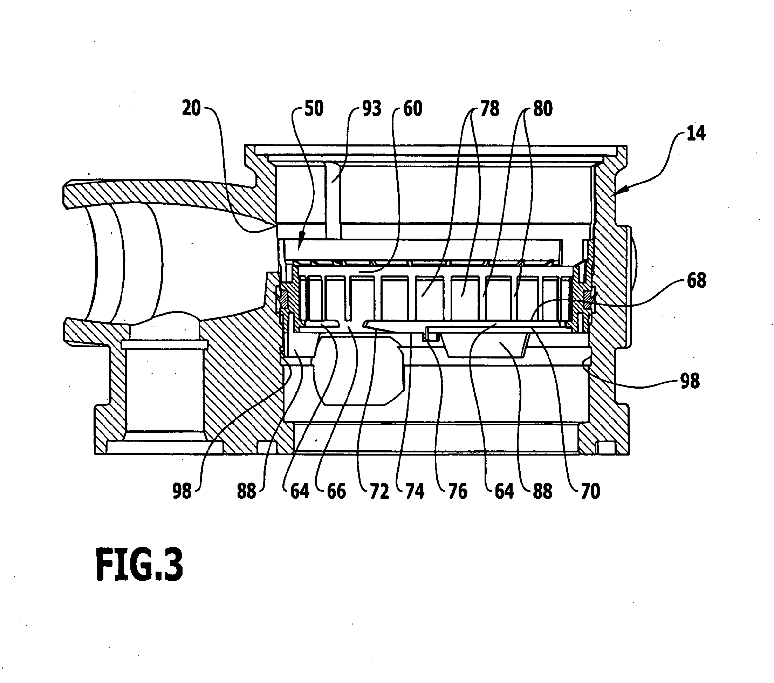

- Figur 3:: eine Schnittansicht des Filterkopfs mit eingesetztem Tragring;

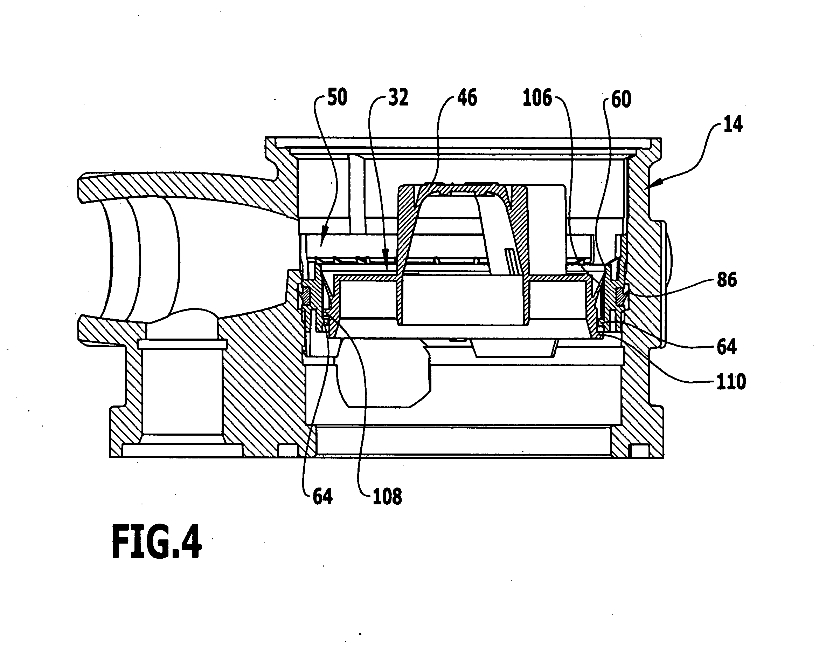

- Figur 4:: eine Schnittansicht des Filterkopfs mit eingesetztem Tragring und eingesetzter oberer Endscheibe und

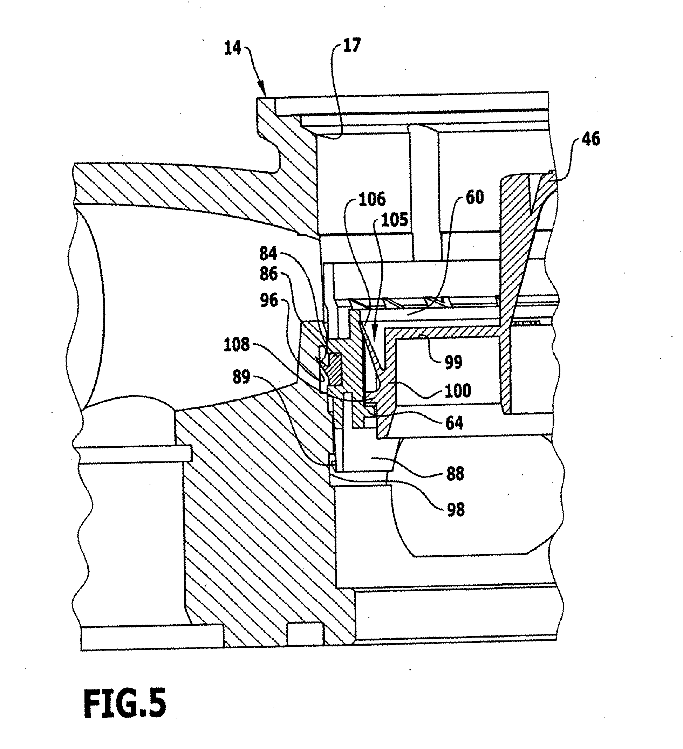

- Figur 5:: eine vergrößerte Schnittansicht eines Teilbereichs des Filterkopfes mit eingesetztem Tragring und eingesetzter oberer Endscheibe.

In der Zeichnung ist schematisch eine insgesamt mit dem Bezugszeichen 10 belegte Filtervorrichtung dargestellt. Diese umfasst ein Filtergehäuse 12 mit einem im Wesentlichen zylinderförmigen Filterkopf 14, an den sich in axialer Richtung ein ebenfalls zylinderförmig ausgebildeter Filtertopf 16 anschließt und der auf seiner dem Filtertopf 16 abgewandten, oberen Stirnseite eine Einführöffnung 17 aufweist, die mittels eines in der Zeichnung nicht dargestellten Deckels fluiddicht verschließbar ist. Der Filterkopf 14 weist in seiner Seitenwandung 18 einen Einlass 20 zum Zuführen von zu filtrierender Hydraulikflüssigkeit sowie einen Auslass 22 zum Abführen gefilterter Hydraulikflüssigkeit auf. Außenseitig schließt sich an den Einlass 20 ein Einlassstutzen 24 an, von dem auf der Außenseite der Seitenwandung 18 eine parallel zur Längsachse 26 des Filtergehäuses 12 ausgerichtete Bypassleitung 28 abzweigt, die an ihrem in der Zeichnung nicht dargestellten freien Ende in üblicher Weise ein Bypassventil in Form eines federbelasteten Rückschlagventils trägt.

Das Filtergehäuse 12 umgibt ein Filterelement 30, das über die Einführöffnung 17 in das Filtergehäuse 12 einsetzbar und bei Bedarf austauschbar ist. Es ist zylinderförmig ausgestaltet und weist auf seiner der Einführöffnung 17 zugewandten Oberseite eine obere Endscheibe 32 auf, und auf seiner der Einführöffnung 17 abgewandten Unterseite umfasst das Filterelement 30 eine untere Endscheibe 34. Zwischen der oberen Endscheibe 32 und der unteren Endscheibe 34 ist ein Filtermaterial 36 angeordnet, das auf seiner Außenseite ein Stützrohr 38 trägt mit einer Vielzahl von Durchlassöffnungen 40. Das Filtermaterial 36 ist in üblicher Weise sternförmig gefaltet und kann in radialer Richtung von innen nach außen von der Hydraulikflüssigkeit durchströmt werden. Die Hydraulikflüssigkeit kann ausgehend vom Einlass 20 über eine zentrale Zulauföffnung 42 der oberen Endscheibe 32 in den vom Filtermaterial 36 umgebenen Innenraum 44 des Filtermaterials 36 einströmen. Ausgehend vom Innenraum 44 kann die Hydraulikflüssigkeit dann das Filtermaterial 36 und das Stützrohr 38 in radialer Richtung durchströmen, um anschließend zum Auslass 22 zu gelangen. Unterseitig wird der Innenraum 44 von der unteren Endscheibe 34 abgeschlossen.

Oberseitig schließt sich an die obere Endscheibe 32 ein Griff 46 des Filterelements 30 an, der einstückig mit der oberen Endscheibe 32 verbunden ist.

Die obere Endscheibe 32 ist von einem Tragring 50 in Umfangsrichtung umgeben, der ebenso wie die obere Endscheibe 32 in Form eines einteiligen Kunststoffformteiles ausgebildet ist. Er umfasst eine innere Zylinderwand 52 und eine äußere Zylinderwand 54, die koaxial zur Längsachse 26 ausgerichtet und in Längsrichtung ungefähr mittig einstückig miteinander verbunden sind. Die äußere Zylinderwand 54 ist länger ausgebildet als die innere Zylinderwand 54, so dass sie mit ihrem der Einführöffnung 17 oberen Endbereich 56 über die innere Zylinderwand 52 hervorsteht. Letztere bildet mit ihrem der Einführöffnung 17 zugewandten oberen Endbereich 58 innenseitig eine erste Dichtfläche 60 aus und an ihrem der Einführöffnung 17 abgewandten unteren Endbereich 62 trägt die innere Zylinderwand 52 insgesamt drei sich in Umfangsrichtung des Filterelementes 30 jeweils über einen Teilbereich erstreckende zweite Arretierungsglieder 64, die in Umfangsrichtung im Abstand zueinander angeordnet sind und zwischen sich insgesamt drei Freiräume 66 ausbilden. Die Oberseiten 68 der zweiten Arretierungsglieder 64 sind in einer senkrecht zur Längsachse 26 ausgerichteten Ebene angeordnet, d. h. sie verlaufen senkrecht zur Längsachse 26. Die Unterseiten 70 der zweiten Arretierungsglieder 64 weisen jeweils ausgehend von einem Freiraum 66 eine Führungsfläche 72 auf, die nach Art einer Rampe ausgebildet ist und zur Längsachse 26 geneigt ist. An die Führungsfläche 72 schließt sich in Umfangsrichtung ein senkrecht zur Längsachse 26 ausgerichteter Arretierungsabschnitt 74 an, der an seinem der Führungsfläche 72 abgewandten Ende einen axial ausgerichteten Endanschlag 76 trägt, der zapfenförmig von der Unterseite 70 des jeweiligen zweiten Arretierungsgliedes 64 absteht.

Zwischen der ersten Dichtfläche 60 und den zweiten Arretierungsgliedern 64 weist die innere Zylinderwand 52 eine Vielzahl von Erhebungen 78 auf, zwischen denen jeweils eine senkrecht zur Umfangsrichtung und somit parallel zur Längsachse 26 verlaufende Vertiefung 80 angeordnet ist.

Die äußere Zylinderwand 54 weist außenseitig eine Ringnut 82 auf, in der ein Dichtring 84 angeordnet ist mit einer nach außen weisenden Dichtlippe 86, die schräg zur Längsachse 26 ausgerichtet und zur Einführöffnung 17 nach oben geneigt ist. Unterseitig schließen sich an die äußere Zylinderwand 54 insgesamt drei in Umfangsrichtung gleichmäßig verteilt angeordnete Rastflügel 88 an, die an ihrem freien Ende jeweils eine nach außen gerichtete Rastnase 89 tragen. Die Rastflügel 88 sind einstückig mit der äußeren Zylinderwand 54 verbunden und sind mit ihrem freien Ende, an dem jeweils eine Rastnase 89 angeordnet ist, in radialer Richtung elastisch verformbar.

In ihrem über die innere Zylinderwand 52 nach oben überstehenden oberen Endbereich 56 weist die äußere Zylinderwand 54 außenseitig insgesamt drei in Umfangsrichtung gleichmäßig verteilt angeordnete radiale Vorsprünge 91 auf, die nach Art einer Nocke in Form eines Halbzylinders ausgestaltet sind. In der Zeichnung sind lediglich zwei der Vorsprünge 91 erkennbar.

Der Tragring 50 kann bei der Montage der Filtervorrichtung 10 in axialer Richtung über die Einführöffnung 17 in den Filterkopf 14 eingesetzt werden, wobei die radialen Vorsprünge 91 jeweils von einer innenseitig in die Seitenwandung 18 eingeformten Ausnehmung 93 aufgenommen werden, die nach Art einer Nut ausgehend von der Einführöffnung 17 in axialer Richtung verläuft und oberhalb einer ringförmigen Ausdrehung 95 endet, die eine zweite Dichtfläche 96 ausbildet. Die zweite Dichtfläche 96 ist dem Dichtring 84 zugeordnet und dient der dichtenden Anlage der Dichtlippe 86. In axialem Abstand zur Ausdrehung 95 weist die Seitenwandung 18 unterhalb der Ausdrehung 95 eine ringförmige Rastaufnahme 98 auf, in die beim Einsetzen des Tragrings 50 in den Filterkopf 14 die Rastnasen 89 der Rastflügel 88 einschnappen können. Die als U-förmige Nut ausgebildete Rastaufnahme 98 erstreckt sich in Längsrichtung über einen beträchtlich größeren Bereich als die Rastnasen 89. Dies hat zur Folge, dass der Tragring 50 unter Beibehaltung einer dichtenden Anlage des Dichtringes 84 an der zweiten Dichtfläche 96 in axialer Richtung verschoben werden kann, wohingegen eine Drehbewegung des Tragrings 50 um die Längsachse 26 relativ zum Filterkopf 14 durch die formschlüssige Aufnahme der Vorsprünge 91 in der jeweils zugeordneten Ausnehmung 93 unterbunden ist. Die Vorsprünge 91 bilden somit in Kombination mit den Ausnehmungen 93 eine Verdrehsicherung für den Tragring 50 aus.

Das Filterelement 30 kann am Tragring 50 festgelegt werden. Die obere Endscheibe 32 weist hierzu einen von einer Stirnwand 99 nach unten abstehenden, zylinderförmigen Mantel 100 auf, der einen oberen Endbereich 101 des Stützrohrs 38 in Umfangsrichtung umgibt und außenseitig ein ringförmiges Dichtelement 105 in Form einer nach außen weisenden, schräg zur Längsachse 26 ausgerichteten und zur Einführöffnung 17 geneigten Dichtlippe 106 trägt. Unterhalb der Dichtlippe 106 weist der Mantel 100 außenseitig drei radial vorstehende, in Umfangsrichtung gleichmäßig verteilt und im Abstand zueinander angeordnete Anschlagelemente 108 auf. Axial und in Umfangsrichtung versetzt zu den Anschlagelementen 108 trägt der Mantel 100 außenseitig drei erste Arretierungsglieder 110, die in Umfangsrichtung jeweils geringfügig kürzer ausgestaltet sind als die zwischen den zweiten Arretierungsgliedern 64 des Tragrings 50 ausgebildeten Freiräume 66. Dies gibt die Möglichkeit, das Filterelement 30 so weit durch den Tragring 50 hindurchzuführen, bis der Mantel 100 in Höhe des Tragrings 50 angeordnet ist. Die ersten Arretierungsglieder 110 können hierbei jeweils durch einen Freiraum 66 hindurchgeführt werden, und anschließend treffen die Anschlagelemente 108 auf die Oberseiten 68 der zweiten Arretierungsglieder 64, so dass die Einführbewegung des Filterelementes 30 durch die auf den zweiten Arretierungsgliedern 64 aufsitzenden Anschlagelemente 108 begrenzt wird. Anschließend kann das Filterelement 30 innerhalb des Tragrings 50 um die Längsachse 26 verdreht werden, wobei die ersten Arretierungsglieder 110 ausgehend vom jeweiligen Freiraum 66 an der Führungsfläche 72 eines zweiten Arretierungsgliedes 64 entlang gleiten, um anschließend zum Arretierungsabschnitt 74 zu gelangen, wo die Drehbewegung des Filterelementes 30 durch den jeweiligen Endanschlag 76, an dem ein Arretierungsglied 110 anschlägt, limitiert ist.

Der Abstand zwischen den ersten Arretierungsgliedern 110 und der Dichtlippe 106 ist derart gewählt, dass die Dichtlippe 106 dichtend an der ersten Dichtfläche 60 des Tragrings 50 anliegt, nachdem die ersten Arretierungsglieder 110 den jeweiligen Arretierungsabschnitt 74 erreicht haben. In dieser Arretierungsstellung ist das Filterelement 30 unbeweglich am Tragring 50 gehalten, wobei die Dichtlippe 106 dichtend an der ersten Dichtfläche 60 anliegt. Das Filterelement 30 kann jedoch zusammen mit dem Tragring 50 unter Beibehaltung der dichtenden Anlage der Dichtlippe 106 an der ersten Dichtfläche 60 in axialer Richtung relativ zum Filtergehäuse 12 bewegt werden, wobei der auβenseitig am Tragring 50 gehaltene Dichtring 84 mit seiner Dichtlippe 86 dichtend an der zweiten Dichtfläche 96 anliegt.

Soll das Filterelement 30 ausgewechselt werden, so kann es mittels des Griffs 46 ausgehend von der voranstehend beschriebenen Arretierungsstellung um die Längsachse 26 so weit verdreht werden, bis die ersten Arretierungsglieder 110 den jeweiligen Freiraum 66 erreichen, und anschließend kann das Filterelement 30 in axialer Richtung dem Tragring 50 und dem Filtergehäuse 12 entnommen werden.

Die ersten Arretierungsglieder 110 bilden somit in Kombination mit den zweiten Arretierungsgliedern 64 eine Bajonettverbindung aus, über die das Filterelement 30 am Tragring 50 gehalten werden kann. Die Anzahl und die Form der ersten Arretierungsglieder 110 muss an die Anzahl und die Form der Freiräume 66 angepasst sein, da ansonsten das Filterelement 30 nicht in den Tragring 50 eingesetzt werden kann. Darüber hinaus muss der Abstand, den die ersten Arretierungsglieder 110 zur Dichtlippe 106 aufweisen, dem Abstand zwischen den zweiten Arretierungsgliedern 64 und der ersten Dichtfläche 60 des Tragrings 50 entsprechen. Ansonsten ist eine dichte Anlage der Dichtlippe 106 an der ersten Dichtfläche 60 nicht gewährleistet. Durch das Einsetzen eines bestimmten Tragringes 50 in den Filterkopf 14 kann somit der Einsatz eines dem Tragring 50 entsprechenden Filterelementes 30 sichergestellt werden, so dass auf konstruktiv einfache Weise bei ansonsten identischer Ausgestaltung des Filtergehäuses 12 gewährleistet ist, dass optimal an den jeweiligen Einsatzzweck angepasste Filterelemente 30 verwendet werden. Filterelemente 30, die an diesen Einsatzzweck und das heißt an den jeweiligen Tragring 50 nicht angepasst sind, können nicht verwendet werden.

Die ersten Arretierungsglieder 110 bilden in Kombination mit den zweiten Arretierungsgliedern 64 eine Arretierungseinrichtung aus, die darüber hinaus sicherstellt, dass die Dichtlippe 106 auch dann ihre dichtende Anlage an der ersten Dichtfläche 60 beibehält, wenn das Filterelement 30 erheblichen Druckwechselbelastungen unterliegt. Somit ist auch bei starken Druckwechselbelastungen gewährleistet, dass Hydrauliköl, das über den Einlass 20 in den stromaufwärts des Filterelementes 30 angeordneten Schmutzbereich 112 der Filtervorrichtung 10 gelangt, nicht unter Umgehung des Filterelementes 30 unmittelbar zu dem stromabwärts des Filterelementes 30 angeordneten Reinbereich 114 der Filtervorrichtung 10 gelangen kann.

In der voranstehend im Einzelnen beschriebenen Ausführungsform der Erfindung ist der Tragring 50 in Höhe der oberen Endscheibe 32 angeordnet. Die Erfindung ist jedoch nicht auf eine derartige Ausgestaltung beschränkt. Es kann auch vorgesehen sein, dass der Tragring 50 in Höhe der unteren Endscheibe 34 angeordnet ist, die dann eine der oberen Endscheibe 32 entsprechende Ausgestaltung aufweist. Eine derartige Ausgestaltung ist beispielsweise von Vorteil, wenn das Filterelement 30 radial von außen nach innen durchströmt wird.

## Patentansprüche

1. Filtervorrichtung zum Filtrieren einer Flüssigkeit, insbesondere eines Hydrauliköls, mit einem mindestens einen Einlass (20) für zu filtrierende Flüssigkeit und zumindest einen Auslass (22) für gefilterte Flüssigkeit aufweisenden Filtergehäuse (12), einem im Strömungsweg der Flüssigkeit zwischen dem mindestens einen Einlass (20) und dem mindestens einen Auslass (22) positionierbaren Filterelement (30) und einer zumindest ein Dichtelement (105) und eine diesem zugeordnete erste Dichtfläche (60) aufweisenden Dichtungseinrichtung, wobei im Filtergehäuse (12) ein Tragring (50) gehalten ist, der die erste Dichtfläche (60) oder das Dichtelement (105) aufweist, wobei das Dichtelement (105) in einer Dichtstellung dichtend an die erste Dichtfläche (60) anlegbar ist zum dichten Abtrennen eines stromaufwärts des Filterelements (30) angeordneten Schmutzbereichs für zu filtrierende Flüssigkeit von einem stromabwärts des Filterelements (30) angeordneten Reinbereich für gefilterte Flüssigkeit, und wobei die Filtervorrichtung (10) eine Arretierungseinrichtung (64, 110) aufweist, wobei das Dichtelement (105) mittels der Arretierungseinrichtung (64, 110) in seiner Dichtstellung relativ zur ersten Dichtfläche (60) zumindest in axialer Richtung arretierbar ist, **dadurch gekennzeichnet, dass** der Tragring (50) zusammen mit dem Filterelement (30) unter Aufrechterhaltung einer dichten Anlage des Dichtelements (105) an der ersten Dichtfläche (60) in axialer Richtung beweglich im Filtergehäuse (12) gehalten ist.

2. Filtervorrichtung nach Anspruch 1, **dadurch gekennzeichnet, dass** das Dichtelement (105) mittels der Arretierungseinrichtung (64, 110) mit der ersten Dichtfläche (60) verspannbar ist.

3. Filtervorrichtung nach Anspruch 1 oder 2, **dadurch gekennzeichnet, dass** das Dichtelement (105) eine Dichtlippe (106) aufweist.

4. Filtervorrichtung nach einem der voranstehenden Ansprüche, **dadurch gekennzeichnet, dass** das Filterelement (30) ein Filtermaterial (36) aufweist, an dessen oberer und/oder unterer Stirnseite eine Endscheibe (32, 34) angeordnet ist und das in radialer Richtung von der Flüssigkeit durchströmbar ist, wobei an einer Endscheibe (32) die erste Dichtfläche oder das Dichtelement (105) angeordnet ist.

5. Filtervorrichtung nach Anspruch 4, **dadurch gekennzeichnet, dass** die erste Dichtfläche oder das Dichtelement (105) stoffschlüssig oder einstückig mit der Endscheibe (32) verbunden ist.

6. Filtervorrichtung nach Anspruch 4 oder 5, **dadurch gekennzeichnet, dass** eine erste Endscheibe (32) dem Einlass (20) zugewandt und die zweite Endscheibe (34) dem Einlass (20) abgewandt ist und dass die erste Dichtfläche oder das Dichtelement (105) an der dem Einlass (20) zugewandten ersten Endscheibe (32) angeordnet ist.

7. Filtervorrichtung nach einem der voranstehenden Ansprüche, **dadurch gekennzeichnet, dass** die Arretierungseinrichtung miteinander zusammenwirkende erste und zweite Arretierungsglieder (110, 64) aufweist, die relativ zueinander bewegbar sind zwischen einer Freigabestellung, in der das Dichtelement (105) in axialer Richtung relativ zur ersten Dichtfläche (60) bewegbar ist, und einer Arretierungsstellung, in der das Dichtelement (105) zumindest in axialer Richtung unbeweglich an der ersten Dichtfläche (60) gehalten ist.

8. Filtervorrichtung nach Anspruch 7, **dadurch gekennzeichnet, dass** das Filterelement (30) in der Freigabestellung der Arretierungsglieder (64, 110) entlang einer Längsachse (26) des Filtergehäuses (12) in das Filtergehäuse (12) einsetzbar ist, und dass durch Drehen des in das Filtergehäuse (12) eingesetzten Filterelements (30) um die Längsachse (26) des Filtergehäuses (12) die Arretierungsglieder (64, 110) in ihre Arretierungsstellung überführbar sind.

9. Filtervorrichtung nach Anspruch 7 oder 8, **dadurch gekennzeichnet, dass** die Arretierungseinrichtung mindestens zwei zweite Arretierungsglieder (64) aufweist, die in Umfangsrichtung des Filterelementes (30) im Abstand zueinander angeordnet sind und zwischen sich einen Freiraum (66) ausbilden zum Hindurchführen eines ersten Arretierungsgliedes (110) beim Einsetzen des Filterelements (30) in das Filtergehäuse (12).

10. Filtervorrichtung nach Anspruch 7, 8 oder 9, **dadurch gekennzeichnet, dass** das mindestens eine erste Arretierungsglied (110) in der Arretierungsstellung ein zweites Arretierungsglied (64) untergreift.

11. Filtervorrichtung nach einem der Ansprüche 7 bis 10, **dadurch gekennzeichnet, dass** das Filterelement (30) ein Filtermaterial (36) aufweist, an dessen oberer und/oder unterer Stirnseite eine Endscheibe (32, 34) angeordnet ist und das in radialer Richtung durchströmbar ist, wobei an einer Endscheibe (32) zumindest ein erstes oder ein zweites Arretierungsglied (110, 64) angeordnet ist.

12. Filtervorrichtung nach Anspruch 11, **dadurch gekennzeichnet, dass** das mindestens eine erste oder zweite Arretierungsglied (110, 64) stoffschlüssig oder einstückig mit der Endscheibe (32) verbunden ist.

13. Filtervorrichtung nach Anspruch 12, **dadurch gekennzeichnet, dass** das mindestens eine erste oder zweite Arretierungsglied (110, 64) stoffschlüssig oder einstückig mit der ersten Dichtfläche oder dem Dichtelement (105) verbunden ist.

14. Filtervorrichtung nach einem der Ansprüche 7 bis 13, **dadurch gekennzeichnet, dass** die Arretierungseinrichtung zumindest eine in axiale Richtung geneigte Führungsfläche (72) aufweist, an der ein erstes und/oder zweites Arretierungsglied (110, 64) beim Übergang von der Freigabestellung in die Arretierungsstellung unter Ausführung einer Axialbewegung entlanggleitet.

15. Filtervorrichtung nach Anspruch 14, **dadurch gekennzeichnet, dass** an der Unterseite (70) von mindestens einem zweiten Arretierungsglied (64) eine Führungsfläche (72) angeordnet ist, an der entlang ein erstes Arretierungsglied (110) verschiebbar ist beim Übergang von der Freigabestellung in die Arretierungsstellung.

16. Filtervorrichtung nach einem der voranstehenden Ansprüche, **dadurch gekennzeichnet, dass** die Arretierungseinrichtung (64, 110) eine Bajonettverbindung ausbildet.

17. Filtervorrichtung nach einem der voranstehenden Ansprüche, **dadurch gekennzeichnet, dass** die Filtervorrichtung (10) mindestens ein Anschlagelement (108) aufweist.

18. Filtervorrichtung nach Anspruch 17, **dadurch gekennzeichnet, dass** das mindestens eine Anschlagelement (108) auf ein erstes oder zweites Arretierungsglied (110, 64) aufsetzbar ist.

19. Filtervorrichtung nach Anspruch 17 oder 18, **dadurch gekennzeichnet, dass** die Filtervorrichtung (10) mehrere in Umfangsrichtung des Filterelements (30) im Abstand zueinander angeordnete Anschlagelemente (108) aufweist.

20. Filtervorrichtung nach einem der Ansprüche 17, 18 oder 19, **dadurch gekennzeichnet, dass** in der Arretierungsstellung zumindest ein zweites Arretierungsglied (64) in axialer Richtung zwischen einem Anschlagelement (108) und einem ersten Arretierungsglied (110) angeordnet ist.

21. Filtervorrichtung nach Anspruch 20, **dadurch gekennzeichnet, dass** die Filtervorrichtung (10) mehrere in Umfangsrichtung des Filterelements (30) im Abstand zueinander angeordnete erste Arretierungsglieder (110) sowie mehrere axial und in Umfangsrichtung versetzt zu den ersten Arretierungsgliedern (110) angeordnete Anschlagelemente (108) aufweist.

22. Filtervorrichtung nach einem der Ansprüche 17 bis 21, **dadurch gekennzeichnet, dass** das mindestens eine Anschlagelement (108) an einer Endscheibe (32) des Filterelements (30) angeordnet ist.

23. Filtervorrichtung nach Anspruch 22, **dadurch gekennzeichnet, dass** das mindestens eine Anschlagelement (108) stoffschlüssig oder einstückig mit der Endscheibe (32) verbunden ist.

24. Filtervorrichtung nach einem der voranstehenden Ansprüche, **dadurch gekennzeichnet, dass** zwischen dem Tragring (50) und dem Filtergehäuse (12) ein dichtend an eine zweite Dichtfläche (96) anlegbarer Dichtring (84) angeordnet ist.

25. Filtervorrichtung nach Anspruch 24, **dadurch gekennzeichnet, dass** der Dichtring (84) eine Dichtlippe (86) aufweist.

26. Filtervorrichtung nach Anspruch 24 oder 25, **dadurch gekennzeichnet, dass** der Dichtring (84) in einer Ringnut (82) des Tragrings (50) angeordnet ist.

27. Filtervorrichtung nach Anspruch 24, 25 oder 26, **dadurch gekennzeichnet, dass** die zweite Dichtfläche (96) von einer Ausdrehung (95) des Filtergehäuses (12) ausgebildet ist.

28. Filtervorrichtung nach einem der voranstehenden Ansprüche, **dadurch gekennzeichnet, dass** der Tragring (50) um die Längsachse (26) des Filtergehäuses (12) unverdrehbar im Filtergehäuse (12) gehalten ist.

29. Filtervorrichtung nach Anspruch 28, **dadurch gekennzeichnet, dass** am Tragring (50) und/oder am Filtergehäuse (12) mindestens ein radialer Vorsprung (91) angeordnet ist, der in eine am Filtergehäuse (12) bzw. am Tragring (50) angeordnete Ausnehmung (93) eintaucht.

30. Filtervorrichtung nach einem der voranstehenden Ansprüche, **dadurch gekennzeichnet, dass** am Tragring (50) das Dichtelement oder die erste Dichtfläche (60) und axial beabstandet zum Dichtelement bzw. zur ersten Dichtfläche (60) mindestens ein erstes oder zweites Arretierungsglied (110, 64) angeordnet sind.

31. Filtervorrichtung nach Anspruch 30, **dadurch gekennzeichnet, dass** das mindestens eine erste oder zweite Arretierungsglied (64) stoffschlüssig oder einstückig mit dem Tragring (50) verbunden ist.

32. Filtervorrichtung nach Anspruch 30 oder 31, **dadurch gekennzeichnet, dass** zwischen der ersten Dichtfläche (60) und dem mindestens einen ersten oder zweiten Arretierungsglied (64) mindestens eine schräg oder senkrecht zur Umfangsrichtung verlaufende Vertiefung (80) angeordnet ist.

33. Filtervorrichtung nach einem der voranstehenden Ansprüche, **dadurch gekennzeichnet, dass** der Tragring (50) mit dem Filtergehäuse (12) verrastbar ist.

34. Filtervorrichtung nach einem der voranstehenden Ansprüche, **dadurch gekennzeichnet, dass** das Filterelement (30) ein radial von einer Flüssigkeit, insbesondere von Hydrauliköl, durchströmbares Filtermaterial (36) aufweist, an dessen oberer und/oder unterer Stirnseite eine Endscheibe (32, 34) angeordnet ist, wobei an einer Endscheibe (32) die erste Dichtfläche (60) oder das dichtend an die erste Dichtfläche (60) anlegbare Dichtelement (105) gehalten ist und wobei an einer Endscheibe (32) zumindest ein erstes Arretierungsglied (110) angeordnet ist, das mit einem zweiten Arretierungsglied (64) der Filtervorrichtung (10) zusammenwirkt zum Arretieren der Dichtfläche (60) bzw. des Dichtelements (105) zumindest in axialer Richtung.

35. Filtervorrichtung nach Anspruch 34, **dadurch gekennzeichnet, dass** das mindestens eine erste Arretierungsglied (110) und/oder die erste Dichtfläche bzw. das Dichtelement (105) stoffschlüssig oder einstückig mit der oberen oder unteren Endscheibe (32, 34) verbunden sind.

36. Filtervorrichtung nach Anspruch 34 oder 35, **dadurch gekennzeichnet, dass** in axialer Richtung zwischen der ersten Dichtfläche bzw. dem Dichtelement (105) und dem mindestens einen ersten Arretierungsglied (110) zumindest ein Anschlagelement (108) angeordnet ist.

37. Filtervorrichtung nach Anspruch 36, **dadurch gekennzeichnet, dass** das Filterelement (30) mehrere in Umfangsrichtung im Abstand zueinander angeordnete erste Arretierungsglieder (110) aufweist sowie mehrere axial und in Umfangsrichtung versetzt zu den ersten Arretierungsgliedern (110) angeordnete Anschlagelemente (108).

## Claims

1. Filter device for filtering a liquid, in particular, a hydraulic oil, comprising a filter housing (12) having a least one inlet (20) for liquid to be filtered and at least one outlet (22) for filtered liquid, a filter element (30) positionable in the flow path of the liquid between the at least one inlet (20) and the at least one outlet (22), and a sealing device having at least one sealing element (105) and a first sealing surface (60) associated with the sealing element, a supporting ring (50) comprising the first sealing surface (60) or the sealing element (105) being held in the filter housing (12), the sealing element (105) in a sealing position being positionable in a sealing manner on the first sealing surface (60) for sealing off a dirt area arranged upstream of the filter element (30) for liquid to be filtered from a clean area arranged downstream of the filter element (30) for filtered liquid, and the filter device (10) comprising a locking device (64, 110), the sealing element (105) being adapted to be locked in its sealing position at least in the axial direction relative to the first sealing surface (60) by means of the locking device (64, 110), **characterized in that** the supporting ring (50) is held together with the filter element (30) for movement in the axial direction in the filter housing (12) with the sealing element (105) continuing to lie in a sealing manner on the first sealing surface (60).

2. Filter device in accordance with claim 1, **characterized in that** the sealing element (105) is adapted to be clamped to the first sealing surface (60) by means of the locking device (64, 110).

3. Filter device in accordance with claim 1 or 2, **characterized in that** the sealing element (105) has a sealing lip (106).

4. Filter device in accordance with any one of the preceding claims, **characterized in that** the filter element (30) comprises a filter material (36) through which the liquid flows in a radial direction, the filter material having an end plate (32, 34) arranged at its upper and/or lower end face, and the first sealing surface or the sealing element (105) being arranged on an end plate (32).

5. Filter device in accordance with claim 4, **characterized in that** the first sealing surface or the sealing element (105) is connected with a substance-to-substance bond or integrally to the end plate (32).

6. Filter device in accordance with claim 4 or 5, **characterized in that** a first end plate (32) faces the inlet (20), and the second end plate (34) faces away from the inlet (20), and **in that** the first sealing surface or the sealing element (105) is arranged on the first end plate (32) facing the inlet (20).

7. Filter device in accordance with any one of the preceding claims, **characterized in that** the locking device has interacting first and second locking members (110, 64) which are movable relative to one another between a released position in which the sealing element (105) is movable in the axial direction relative to the first sealing surface (60) and a locked position in which the sealing element (105) is held on the first sealing surface (60) so as to be immovable at least in the axial direction.

8. Filter device in accordance with claim 7, **characterized in that** the filter element (30) is adapted to be inserted into the filter housing (12) along a longitudinal axis (26) of the filter housing (12) with the locking members (64, 110) in the released position, and **in that** the locking members (64, 110) are adapted to be transferred to their locked position by rotating the filter element (30) inserted in the filter housing (12) about the longitudinal axis (26) of the filter housing (12).

9. Filter device in accordance with claim 7 or 8, **characterized in that** the locking device has as least two second locking members (64) which are arranged in spaced relation to each other in the circumferential direction of the filter element (30) and form between them a free space (66) for passage of a first locking member (110) therethrough upon inserting the filter element (30) into the filter housing (12).

10. Filter device in accordance with claim 7, 8 or 9, **characterized in that** in the locked position the at least one first locking member (110) engages under a second locking member (64).

11. Filter device in accordance with any one of claims 7 to 10, **characterized in that** the filter element (30) comprises a filter material (36) through which the liquid flows in a radial direction, the filter material having an end plate (32, 34) arranged at its upper and/or lower end face, and at least one first or one second locking member (110, 64) being arranged on an end plate (32).

12. Filter device in accordance with claim 11, **characterized in that** the at least one first or second locking member (110, 64) is connected with a substance-to-substance bond or integrally to the end plate (32).

13. Filter device in accordance with claim 12, **characterized in that** the at least one first or second locking member (110, 64) is connected with a substance-to-substance bond or integrally to the first sealing surface or the sealing element (105).

14. Filter device in accordance with any one of claims 7 to 13, **characterized in that** the locking device has at least one guide surface (72) inclined in the axial direction, a first and/or second locking member (110, 64) being adapted to slide along the guide surface while carrying out an axial movement during the transition from the released position to the locked position.

15. Filter device in accordance with claim 14, **characterized in that** a guide surface (72) along which a first locking member (110) is adapted to be displaced during the transition from the released position to the locked position is arranged on the underside (70) of at least one second locking member (64).

16. Filter device in accordance with any one of the preceding claims, **characterized in that** the locking device (64, 110) forms a bayonet connection.

17. Filter device in accordance with any one of the preceding claims, **characterized in that** the filter device (10) has at least one stop element (108).

18. Filter device in accordance with claim 17, **characterized in that** the at least one stop element (108) is adapted to be positioned on a first or second locking member (110, 64).

19. Filter device in accordance with claim 17 or 18, **characterized in that** the filter device (10) has a plurality of stop elements (108) arranged in spaced relation to one another in the circumferential direction of the filter element (30).

20. Filter device in accordance with any one of claims 17, 18 or 19, **characterized in that** in the locked position at least one second locking member (64) is arranged in the axial direction between a stop element (108) and a first locking member (110).

21. Filter device in accordance with claim 20, **characterized in that** the filter device (10) has a plurality of first locking members (110) arranged in spaced relation to one another in the circumferential direction of the filter element (30) and a plurality of stop elements (108) arranged in axially and circumferentially offset relation to the first locking members (110).

22. Filter device in accordance with any one of claims 17 to 21, **characterized in that** the at least one stop element (108) is arranged on an end plate (32) of the filter element (30).

23. Filter device in accordance with claim 22, **characterized in that** the at least one stop element (108) is connected with a substance-to-substance bond or integrally to the end plate (32).

24. Filter device in accordance with any one of the preceding claims, **characterized in that** a sealing ring (84) adapted to be positioned in a sealing manner on a second sealing surface (96) is arranged between the supporting ring (50) and the filter housing (12).

25. Filter device in accordance with claim 24, **characterized in that** the sealing ring (84) has a sealing lip (86).

26. Filter device in accordance with claim 24 or 25, **characterized in that** the sealing ring (84) is arranged in a ring groove (82) of the supporting ring (50).

27. Filter device in accordance with claim 24, 25 or 26, **characterized in that** the second sealing surface (96) is formed by a hollow (95) which is turned out of the filter housing (12).

28. Filter device in accordance with any one of the preceding claims, **characterized in that** the supporting ring (50) is held in the filter housing (12) so as to be non-rotatable about the longitudinal axis (26) of the filter housing (12).

29. Filter device in accordance with claim 28, **characterized in that** at least one radial projection (91) is arranged on the supporting ring (50) and/or on the filter housing (12) and enters a recess (93) arranged on the filter housing (12) or on the supporting ring (50).

30. Filter device in accordance with any one of the preceding claims, **characterized in that** the sealing element or the first sealing surface (60) is arranged on the supporting ring (50), and at least one first or second locking member (110, 64) is arranged in axially spaced relation to the sealing element or the first sealing surface (60).

31. Filter device in accordance with claim 30, **characterized in that** the at least one first or second locking member (64) is connected with a substance-to-substance bond or integrally to the supporting ring (50).

32. Filter device in accordance with claim 30 or 31, **characterized in that** at least one depression (80) extending obliquely or perpendicularly to the circumferential direction is arranged between the first sealing surface (60) and the at least one first or second locking member (64).

33. Filter device in accordance with any one of the preceding claims, **characterized in that** the supporting ring (50) is adapted to be latched to the filter housing (12).

34. Filter device in accordance with any one of the preceding claims, **characterized in that** the filter element (30) comprises a filter material (36) through which a liquid, in particular, hydraulic oil, flows in a radial direction, the filter material having an end plate (32, 34) arranged at its upper and/or lower end face, wherein the first sealing surface (60) or the sealing element (105) adapted to be positioned in a sealing manner on the first sealing surface (60) is held on an end plate (32), and wherein at least one first locking member (110) which interacts with a second locking member (64) of the filter device (10) to lock the sealing surface (60) or the sealing element (105) at least in the axial direction is arranged on an end plate (32).

35. Filter device in accordance with claim 34, **characterized in that** the at least one first locking member (110) and/or the first sealing surface or the sealing element (105) are connected with a substance-to-substance bond or integrally to the upper or lower end plate (32, 34).

36. Filter device in accordance with claim 34 or 35, **characterized in that** at least one stop element (108) is arranged in the axial direction between the first sealing surface or the sealing element (105) and the at least one first locking member (110).

37. Filter device in accordance with claim 36, **characterized in that** the filter element (30) has a plurality of first locking members (110) arranged in spaced relation to one another in the circumferential direction and a plurality of stop elements (108) arranged in axially and circumferentially offset relation to the first locking members (110).

## Revendications

1. Dispositif de filtrage destiné à filtrer un liquide, notamment une huile hydraulique, ledit dispositif de filtrage comportant un boîtier de filtre (12) qui possède au moins une entrée (20) destinée au liquide à filtrer et au moins une sortie (22) destinée au liquide filtré, un élément de filtrage (30) pouvant être positionné dans le chemin d'écoulement du liquide entre l'au moins une entrée (20) et l'au moins une sortie (22) et un dispositif d'étanchéité comportant au moins un élément d'étanchéité (105) et une première face d'étanchéité (60) associée à celui-ci, une bague de support (50) étant maintenue dans le boîtier de filtre (12), laquelle possède la première face d'étanchéité (60) ou l'élément d'étanchéité (105), l'élément d'étanchéité (105) pouvant être appliqué dans une position d'étanchéité de façon étanche contre la première face d'étanchéité (60) afin de séparer de façon étanche une région souillée, disposée en amont de l'élément de filtrage (30) et destinée au liquide à filtrer, d'une région pure disposée en aval de l'élément de filtrage (30) et destinée au liquide filtré, et le dispositif de filtrage (10) comportant un dispositif de blocage (64, 110), l'élément d'étanchéité (105) pouvant être bloqué au moins dans une direction axiale au moyen du dispositif de blocage (64, 110) dans sa position d'étanchéité par rapport à la première face d'étanchéité (60), **caractérisé en ce que** la bague de support (50) est maintenue dans le boîtier de filtrage (60), conjointement avec l'élément de filtrage (30), de façon à être mobile dans une direction axiale tout en respectant l'étanchéité de l'élément d'étanchéité (105) contre la première face d'étanchéité (60).

2. Dispositif de filtrage selon la revendication 1, **caractérisé en ce que** l'élément d'étanchéité (105) est serré sur la première face d'étanchéité (60) au moyen du dispositif de blocage (64, 110).

3. Dispositif de filtrage selon la revendication 1 ou 2, **caractérisé en ce que** l'élément d'étanchéité (105) possède une lèvre d'étanchéité (106).

4. Dispositif de filtrage selon l'une des revendications précédentes, **caractérisé en ce que** l'élément de filtrage (30) possède un matériau de filtrage (36) du côté frontal supérieur et/ou inférieur duquel est disposé un disque d'extrémité (32, 34) et à travers lequel le liquide peut s'écouler dans une direction radiale, la première face d'étanchéité ou l'élément d'étanchéité (105) étant disposé au niveau d'un disque d'extrémité (32).

5. Dispositif de filtrage selon la revendication 4, **caractérisé en ce que** la première face d'étanchéité ou l'élément d'étanchéité (105) est relié en venue de matière ou d'une seule pièce au disque d'extrémité (32).

6. Dispositif de filtrage selon la revendication 4 ou 5, **caractérisé en ce que** le premier disque d'extrémité (32) se trouve du côté de l'entrée (20) et le deuxième disque d'extrémité (34) se trouve du côté opposé à l'entrée (20) et **en ce que** la première face d'étanchéité ou l'élément d'étanchéité (105) est disposé au niveau du premier disque d'extrémité (32) se trouvant du côté de l'entrée (20).

7. Dispositif de filtrage selon l'une des revendications précédentes, **caractérisé en ce que** le dispositif de blocage possède des premier et deuxième éléments de blocage (110, 64) qui coopèrent l'un avec l'autre et qui peuvent être déplacés l'un par rapport à l'autre entre une position de libération, dans laquelle l'élément d'étanchéité (105) est apte à se déplacer dans une direction axiale par rapport à la première face d'étanchéité (60), et une position de blocage dans laquelle l'élément d'étanchéité (105) est maintenu immobile, au moins dans une direction axiale, contre la première face d'étanchéité (60).

8. Dispositif de filtrage selon la revendication 7, **caractérisé en ce que** l'élément de filtrage (30) peut être inséré dans le boîtier de filtre (12) le long d'un axe longitudinal (26) du boîtier de filtre (12) lorsque les éléments de blocage (64, 110) sont dans la position de libération, et **en ce que** l'on peut amener les éléments de blocage (64, 110) dans leur position de blocage en faisant tourner l'élément de filtrage (30), inséré dans le boîtier de filtre (12), autour de l'axe longitudinal (26) du boîtier de filtre (12).

9. Dispositif de filtrage selon la revendication 7 ou 8, **caractérisé en ce que** le dispositif de blocage comporte au moins deux deuxièmes éléments de blocage (64) qui sont disposés à distance l'un de l'autre dans la direction périphérique de l'élément de filtrage (30) et qui forment entre eux un espace libre (66) permettant le passage d'un premier élément de blocage (110) lorsque le premier élément de filtrage (30) est inséré dans le boîtier de filtre (12).

10. Dispositif de filtrage selon la revendication 7, 8 ou 9, **caractérisé en ce que** l'au moins un premier élément de blocage (110) s'engage sous un deuxième élément de blocage (64) dans la position de blocage.

11. Dispositif de filtrage selon l'une des revendications 7 à 10, **caractérisé en ce que** l'élément de filtrage (30) possède un matériau de filtrage (36) du côté frontal supérieur et/ou inférieur duquel est disposé un disque d'extrémité (32, 34) et qui permet l'écoulement à travers lui dans une direction radiale, au moins un premier ou un deuxième élément de blocage (110, 64) étant disposé au niveau d'un disque d'extrémité (32).

12. Dispositif de filtrage selon la revendication 11, **caractérisé en ce que** l'au moins un premier ou deuxième élément de blocage (110, 64) est relié en venue de matière ou d'une seule pièce au disque d'extrémité (32).

13. Dispositif de filtrage selon la revendication 12, **caractérisé en ce que** l'au moins un premier ou deuxième élément de blocage (110, 64) est relié en venue de matière ou d'une seule pièce à la première face d'étanchéité ou à l'élément d'étanchéité (105).

14. Dispositif de filtrage selon l'une des revendications 7 à 13, **caractérisé en ce que** le dispositif de blocage présente au moins une face de guidage (72) qui est inclinée dans une direction axiale et le long de laquelle un premier et/ou deuxième élément de blocage (110, 64) glisse tout en effectuant un mouvement axial lors du passage de la position de libération à la position de blocage.

15. Dispositif de filtrage selon la revendication 14, **caractérisé en ce que** du côté inférieur (70) d'au moins un deuxième élément de blocage (64) est disposée une face de guidage (72) le long de laquelle un premier élément de blocage (110) est apte à coulisser lors du passage de la position de libération à la position de blocage.

16. Dispositif de filtrage selon l'une des revendications précédentes, **caractérisé en ce que** le dispositif de blocage (64, 110) forme une liaison à baïonnette.

17. Dispositif de filtrage selon l'une des revendications précédentes, **caractérisé en ce que** le dispositif de filtrage (10) possède au moins un élément de butée (108).

18. Dispositif de filtrage selon la revendication 17, **caractérisé en ce que** l'au moins un élément de butée (108) peut être placé sur un premier ou deuxième élément de blocage (110, 64).

19. Dispositif de filtrage selon la revendication 17 ou 18, **caractérisé en ce que** le dispositif de filtrage (10) possède plusieurs éléments de butée disposés à distance l'un de l'autre dans la direction périphérique de l'élément de filtrage (30).

20. Dispositif de filtrage selon l'une des revendications 17, 18 ou 19, **caractérisé en ce que**, dans la position de blocage, au moins un deuxième élément de blocage (64) est disposé dans une direction axiale entre un élément de butée (108) et un premier élément de blocage (110).

21. Dispositif de filtrage selon la revendication 20, **caractérisé en ce que** le dispositif de filtrage (10) possède plusieurs premiers éléments de blocage (110) disposés à distance l'un de l'autre dans la direction périphérique de l'élément de filtrage (30) ainsi que plusieurs éléments de butée (108) disposés axialement en étant décalés dans la direction périphérique par rapport aux premiers éléments de blocage (110).

22. Dispositif de filtrage selon l'une des revendications 17 à 21, **caractérisé en ce que** l'au moins un élément de butée (108) est disposé au niveau d'un disque d'extrémité (32) de l'élément de filtrage (30).

23. Dispositif de filtrage selon la revendication 22, **caractérisé en ce que** l'au moins un élément de butée (108) est relié en venue de matière ou d'une seule pièce au disque d'extrémité (32).

24. Dispositif de filtrage selon l'une des revendications précédentes, **caractérisé en ce qu'**une bague d'étanchéité (84), qui peut être appliquée de façon étanche contre une deuxième face d'étanchéité (96), est disposée entre la bague de support (50) et le boîtier de filtre (12).

25. Dispositif de filtrage selon la revendication 24, **caractérisé en ce que** la bague d'étanchéité (84) possède une lèvre d'étanchéité (86).

26. Dispositif de filtrage selon la revendication 24 ou 25, **caractérisé en ce que** la bague d'étanchéité (84) est disposée dans une gorge annulaire (82) de la bague de support (50).

27. Dispositif de filtrage selon la revendication 24, 25 ou 26, **caractérisé en ce que** la deuxième face d'étanchéité (96) est formée par un alésage (95) dans le boîtier de filtre (12).

28. Dispositif de filtrage selon l'une des revendications précédentes, **caractérisé en ce que** la bague de support (50) est maintenue dans le boîtier de filtre (12) sans pouvoir tourner autour de l'axe longitudinal (26) du boîtier de filtre (12).

29. Dispositif de filtrage selon la revendication 28, **caractérisé en ce qu'**au moins une saillie radiale (91), qui pénètre dans un évidement (93) ménagé dans le boîtier de filtre (12) ou dans la bague de support (50), est disposée au niveau de la bague de support (50) et/ou au niveau du boîtier de filtre (12).

30. Dispositif de filtrage selon l'une des revendications précédentes, **caractérisé en ce que** l'élément d'étanchéité ou la première face d'étanchéité (60) est disposé au niveau de la bague de support (50) et au moins un premier ou deuxième élément de blocage (110, 64) est disposé axialement à distance de l'élément d'étanchéité ou de la première face d'étanchéité (60).

31. Dispositif de filtrage selon la revendication 30, **caractérisé en ce que** l'au moins un premier ou deuxième élément de blocage (64) est relié en venue de matière ou d'une seule pièce à la bague de support (50).

32. Dispositif de filtrage selon la revendication 30 ou 31, **caractérisé en ce que** au moins une cavité (80), qui s'étend obliquement ou perpendiculairement à la direction périphérique, est ménagée entre la première face d'étanchéité (60) et l'au moins un premier ou deuxième élément de blocage (64).

33. Dispositif de filtrage selon l'une des revendications précédentes, **caractérisé en ce que** la bague de support (50) peut être verrouillée au boîtier de filtre (12).

34. Dispositif de filtrage selon l'une des revendications précédentes, **caractérisé en ce que** l'élément de filtrage (30) possède un matériau de filtrage (36) qui peut être traversé radialement par un liquide, notamment une huile hydraulique, et du côté frontal supérieur et/ou inférieur duquel est disposé un disque d'extrémité (32, 34), la première face d'étanchéité (60) ou l'élément d'étanchéité (105) qui peut être appliqué de façon étanche contre la première face d'étanchéité (60) étant maintenu au niveau d'un disque d'extrémité (32) et au moins un premier élément de blocage (110) étant disposé au niveau d'un disque d'extrémité (32), lequel élément de blocage coopère avec un deuxième élément de blocage (64) du dispositif de filtrage (10) afin de bloquer la face d'étanchéité (60) ou l'élément d'étanchéité (105) au moins dans une direction axiale.

35. Dispositif de filtrage selon la revendication 34, **caractérisé en ce que** l'au moins un premier élément de blocage (110) et/ou la première face d'étanchéité ou l'élément d'étanchéité (105) sont reliés en venue de matière ou d'une seule pièce au disque d'extrémité supérieur ou inférieur (32, 34).

36. Dispositif de filtrage selon la revendication 34 ou 35, **caractérisé en ce qu'**au moins un élément de butée (108) est disposé dans une direction axiale entre la première face d'étanchéité ou l'élément d'étanchéité (105) et l'au moins un premier élément de blocage (110).

37. Dispositif de filtrage selon la revendication 36, **caractérisé en ce que** l'élément de filtrage (30) possède plusieurs premiers éléments de blocage (110) disposés à distance l'un de l'autre dans la direction périphérique ainsi que plusieurs éléments de butée (108) disposés axialement en étant décalés dans la direction périphérique par rapport aux premiers éléments de blocage (110).
